# EUROPEAN PATENT APPLICATION

(11) **EP 2 779 588 A2**
(43) Date of publication of application: **17.09.2014**
(21) Application number: 14158705.5
(22) Date of filing: 11.03.2014
(51) Int. Cl.: H04L 29/12, H04L 12/46

(54) **Methods and apparatus for hostname selective routing in dual-stack hosts**

(30) Priority: 11.03.2013 US 201361776698 P; 10.03.2014 US 201414202191
(71) Applicant: Bluebox Security Inc., San Francisco, CA 94105 (US)
(72) Inventor: Forristal, Jeffrey, Hillsboro, OR Oregon 97123 (US); Ely, Adam, Milton, FL Florida 32583 (US)
(74) Representative: Dennemeyer & Associates S.A.

(57) **Abstract**

The present invention is directed to a method of making Internet network trafficking easier and more secure while resolving a DNS inquiry in systems having both IPv4 and IPv6 elements in the new world situation of two competing DNS systems. The method utilizes a computing system DNS transfer policy to inquire and then provide a response to DNS inquiries that can include differing Internet Protocols. By including the policy inquiry and allowing the system to encode IPv4 addresses within IPv6 addresses, a more secure and quick response is provided allowing business, government and individual users to safely use the Internet in association with any number of Internet capable devices.

## Description

### CROSS-REFERENCE TO RELATED APPLICATIONS

The present application is related to US Provisional Patent Application No. 61/776,698, incorporated herein as if set forth in full.

### FIELD OF THE INVENTION

The present invention relates to methods and apparatus for network traffic routing. More particularly, the present invention relates to a network communications service node to selectively decide how to route network traffic received from a communications-capable device, such as a PC, mobile phone, etc. to particular network destinations.

### BACKGROUND OF THE INVENTION

Domain Name System (DNS) inquiries made by all manner of computing devices, from computers to tablets to telephones are well known and prevalent in modern computer systems. The communication of an IP address in response to an inquiry based on readable text is well known and often practiced. However, as a result of security concerns as well as the desire to improve the speed and accuracy of such inquiries has led users of computer systems to look to better methods of handling and responding to such inquiries. Further, with the advent of IPv6 addresses, new complexities have arisen in the response to DNS inquiries.

Many computer networks have developed policies with respect to the provision of addresses. These policies must be checked by the systems prior to providing an address in response to an inquiry. Such policies are based on, among other things, security concerns, avoidance of dangerous web sites, and maintenance of confidential information and appropriate use of time by network users, among others. Further, due to the potential securitization of addresses brought about by new internet protocols, the use of such security policies can include means and measures to utilize the parameters of the new protocol to carry information to addresses using old protocols.

It would be desirable to provide a routing system and method wherein inquires are first checked against a policy and then, as provided by policy routed to the correct DNS in the most efficient and secure method. It is recognized that routing of network traffic may be performed at an Internet Protocol (IP) level, whereby consecutive IP addresses are aggregated into range(s) of IP addresses and routing decisions are applied based on the IP address range.

While previously such techniques may have had drawbacks because of implementation complexity and in computing resources requirements. An example of this complexity includes when network communication services nodes desire to apply routing decisions on multiple non-consecutive IP addresses, without affecting other IP addresses in the range. The present invention has been designed to overcome these drawbacks.

Objects and advantages of the present invention will become apparent as the description proceeds.

### SUMMARY OF THE INVENTION

In accordance with the present invention, a method for responding to Domain Name System (DNS) inquiries from a network client is provided. The method, in one embodiment, comprises the steps of providing a computing system having elements for at least receiving and sending requests for resolution of a DNS inquiry from computing devices and storing, reviewing and/or modifying the DNS inquiries programmed to perform the method. The system further includes steps of receiving in the computing system one or more DNS inquiries from a network client, wherein the DNS inquiries comprise at least one of an IPv4 DNS 'A' inquiry and an IPv6 DNS 'AAAA' inquiry, and determining in the computing system, whether to provide an IPv6 DNS address response in response to the DNS inquires. The system then responding, in the computing system, with the IPv6 DNS address to the network client when it is determined that the IPv6 DNS address should be provided or responding with an IPv4 DNS address to the network when it is determined that an IPv6 DNS address should not be provided.

In some embodiments, in the method of the present invention the step for determining whether to provide the IPv6 DNS address comprises determining within elements of the computing system whether a hostname associated with the DNS inquiries is part of a pre-determined list of hostnames. Further, the step for determining whether to provide the IPv6 DNS address comprises determining whether a hostname associated with the DNS inquiries is not part of a pre-determined list of hostnames. It will be understood that these embodiments of the method for responding to DNS inquiries from a network client can be received via a VPN gateway.

In embodiments of the present invention, after responding with the IPv6 DNS address to the network client, the method further can include the steps of receiving a plurality of network traffic destined to the responded IPv6 DNS address, determining an IPv4 address associated with the network address, in response to the IPv6 DNS address, requesting network data from a network resource associated with the IPv4 address and the receiving the network data from the network resource. Further, embodiments can include the steps of logging the network data and sending the network data to the network client. The method can further include the steps of determining whether the network data violates a control policy and inhibiting output of the network data to the network client when it is determined that the network data violates the control policy. In this last embodiment, inhibiting output from the computing system includes reducing the transmission speed of the network data to the network client. In embodiments, the method includes a step of determining whether the network data violates a control policy and outputting the network data to the network client when it is determined that the network data does not violate the control policy.

In one aspect of the present invention, a network communications services node for responding to DNS inquiries from a network client is provided. The node includes a memory having a plurality of control policies and a processor coupled to the memory and programmed to receive the DNS inquiries from the network client. The DNS inquiries in this aspect of the invention, comprises an IPv4 DNS inquiry and an IPv6 DNS inquiry, and the processor is programmed to respond to the network client with an IPv4 address or an IPv6 address in response to the DNS inquiries and to the plurality of control policies. The processor operates to determine the IPv6 address in response to the IPv4 address and the IPv4 address can be encapsulated in the IPv6 address. In some embodiments, the processor is either programmed to implement an IPv6 traffic gateway or configured to implement an IPv4 traffic gateway.

In addition it will be understood that the control policies comprise a listing of a plurality of hostnames and the processor is programmed to respond with the IPv4 address when a hostname of the DNS inquiries is identified in the listing of hostnames. The control policies comprise a plurality of hostnames and the processor is programmed to respond appropriately with the IPv6 address or an IPv4 address when a hostname of the DNS inquiries is identified in the plurality of hostnames. In some embodiments the processor is programmed to implement a VPN gateway for communicating with the network client.

Finally, the present invention includes a method for outputting network data to a user on a computing-system programmed to perform the method comprising the steps of sending from the computing-system, an identifier associated with the user to a network communications server node; establishing with the computing-system, a virtual private network with the network communications server node; sending from the computing-system, DNS hostname inquiries to a network communications server node, wherein the DNS hostname inquiries comprises an IPv4 DNS 'A' inquiry and an IPv6 DNS 'AAAA' inquiry; receiving from the computing-system, an IPv6 DNS address from the network communications server node in response to the DNS inquiries when the network communications server node determines a hostname associated with the DNS hostname is in a pre-determined list of hostnames; and receiving from the computing-system, an IPv4 DNS address from the network communications server node in response to the DNS inquiries when the network communications server node determines the hostname associated with the DNS hostname is not in the pre-determined list of hostnames. In this embodiment, the IPv6 DNS address includes, therewithin, the IPv4 DNS address and can further include the step of using the IPv4 DNS address to request data from a remote server.

A more detailed explanation of the invention is provided in the following description and claims and is illustrated in the accompanying drawings.

### BRIEF DESCRIPTION OF THE DRAWINGS

Figure 1 is a representation of a system using the method of the present invention;
Figure 2 is a flow chart of the functionality of the present invention;
Figure 3A is a further flow chart of the functionality of the present invention; and
Figure 3b is a further flow chart of the functionality of the present invention.

### DETAILED DESCRIPTION OF THE ILLUSTRATIVE EMBODIMENT

While the present invention is susceptible of embodiment in various forms, there is shown in the drawings a number of presently preferred embodiments that are discussed in greater detail hereafter. It should be understood that the present disclosure is to be considered as an exemplification of the present invention, and is not intended to limit the invention to the specific embodiments illustrated. It should be further understood that the title of this section of this application ("Detailed Description of an Illustrative Embodiment") relates to a requirement of the United States Patent Office, and should not be found to limit the subject matter disclosed herein.

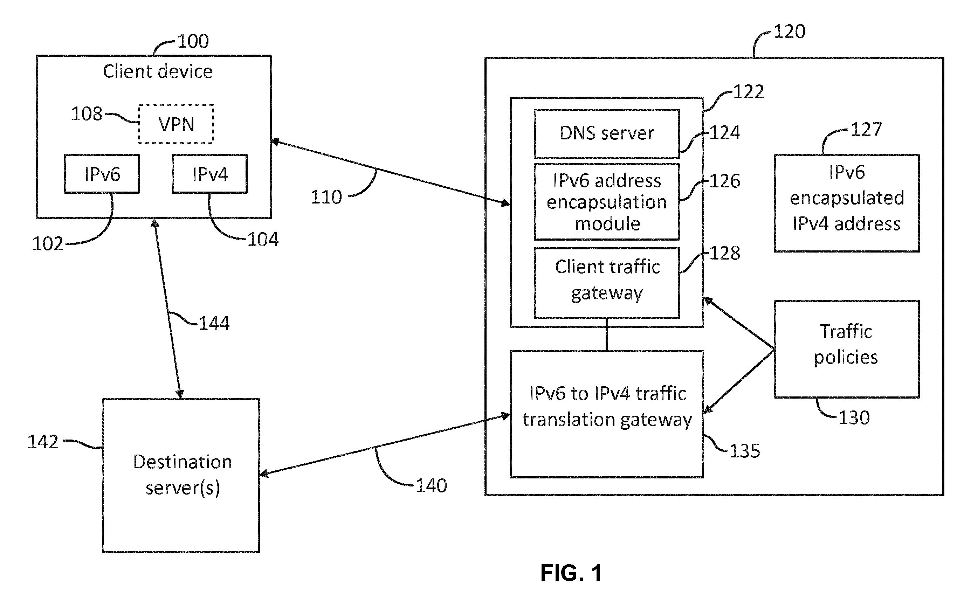

Referring to Figure 1, client device 100 embodies an IPv6 network stack 102, an IPv4 network stack 104, and optionally a VPN client unit 108. The client device as can communicate on communication network 110 and communication network 144. Client device 100 wishes to communicate with the destination server 142. Client device 100 is pre-configured to send all DNS queries to the DNS server 124 in the client traffic module 122 of the traffic inspection system 120. The mobile device 100 is also pre-configured to route an IPv6 network address range to the client traffic gateway 128 in the client traffic module 122 of the traffic inspection system 120. Optionally, the routing of the IPv6 network address range to the client traffic gateway 128 can be pre-configured to utilize a VPN client unit 108 in client device 100.

The client device 100 wishes to communicate with a server identified by the human readable DNS name "www.example.com". The client device 100 performs an "AAAA record" DNS query over a communications network 110 for the hostname "www.example.com" to the DNS server 124 in the client traffic module 122. The DNS server 124 consults a traffic policy 130 and determines the client device 100 should communicate directly to the server. Thus the DNS server 124 returns a DNS response containing no address records to the client device 100 over communications network 110. Next the client device 100 performs an "A record" DNS query over a communications network 110 for the hostname "www.example.com" to the DNS server 124 in the client traffic module 122. The DNS server 124 consults a traffic policy 130 and determines the client device 100 should communicate directly to the server. Thus the DNS server 124 returns a DNS response that includes an address record containing the public network address of the destination server 142. The client device 100 then sends and receives traffic over communications network 144 to the destination server 142.

Also, the client device 100 wishes to communicate with a destination server identified by the human readable DNS name "www.example2.com". The client device 100 performs an "AAAA record" DNS query for the host name "www.example2.com" to the DNS server 124 in the client traffic module 122. The DNS server 124 consults a traffic policy 130 and determines the client device 100 should communicate to the traffic inspection system 120. The DNS server engages an IPv6 address encapsulation module 126, whereby the IPv6 address encapsulation module 126 takes the public IPv4 network address of destination server 142 and performs a transformation on the IPv4 network address, resulting in an encapsulated IPv6 network address 127. The DNS server 124 returns a DNS response that includes the encapsulated IPv6 network address 127 to the client device 100. The client device 100 then sends and receives network traffic via communication network 110 to the client traffic gateway 128 destined to the encapsulated IPv6 network address 127. The client traffic module 122 will receive traffic from the client device 100 and forward the traffic to the traffic translation gateway 135. The traffic translation gateway 135 transforms the IPv6 traffic into IPv4 traffic, using the IPv4 address that is encapsulated in the encapsulated IPv6 network address 127. Then the traffic translation gateway 135 sends and receives network traffic to the destination server 142 via communications network 140. Traffic returned by the destination server 142 goes through the traffic translation gateway 135, where the traffic is transformed from IPv4 traffic into IPv6 traffic utilizing the IPv6 encapsulated IPv4 address 127, and then the traffic is sent via the client traffic gateway 128 to the client device 100.

The method of the present invention is best reviewed using flow charts showing the various steps, it will be seen in the figures that like numbers will be used in the flow charts to show like functionality and elements of the invention.

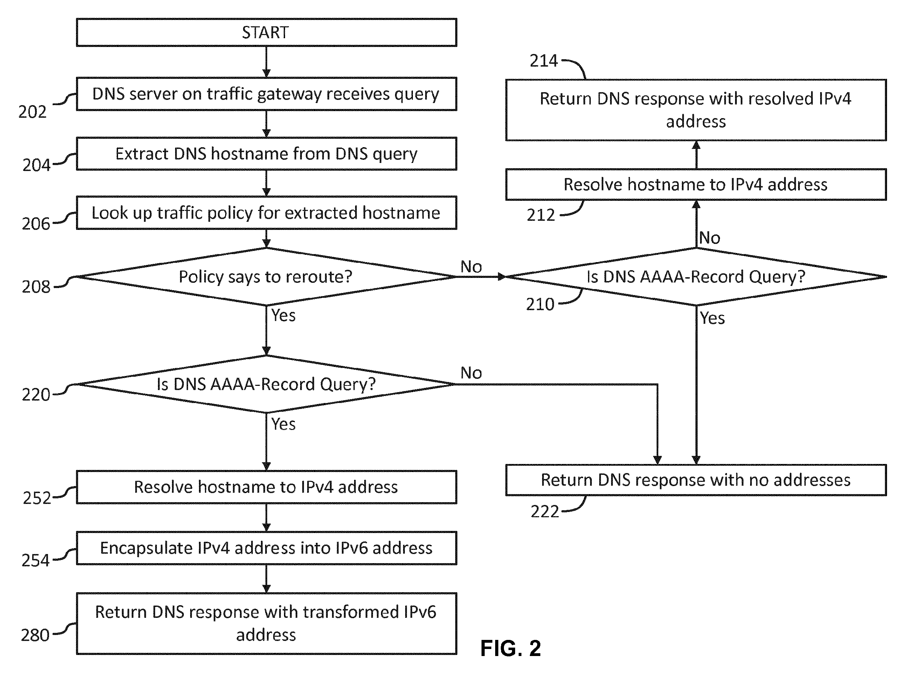

Referring now to Figure 2, a logic flow chart of the operation of one aspect of the invention is shown. The logic flow chart of Figure 2 shows the taking of an incoming Domain Name System (DNS) query, consultation of a traffic policy for the hostname indicated by that query and deciding whether to return the actual public IPv4 address or a substitute encapsulated IPv6 address. More specifically, when a client device 100 (Fig 1) issues a DNS query and the DNS server 124 (Fig 1) receives 202 the query the destination hostname is extracted 204 from the DNS query and the traffic policy is looked-up 206 for the extracted hostname from a storage medium within system 120 (Fig 1). At that point a decision 208 is made whether the found traffic policy indicates to re-route the client device traffic. If re-routing is not indicated, the type of DNS query is considered 210. If it is a DNS A-Record query, the DNS server recursive resolves 212 the hostname to an IPv4 address and returns 214 a constructed DNS response containing the resolved IPv4 address back to the client device 100 (Fig 1) that issued the DNS query. If, when returning in the DNS query consideration 210 the DNS query is a DNS AAAA-Record query , the DNS server returns 222 a constructed DNS response containing no address records back to the client device 100 (Fig 1) that issued the DNS query.

If however the found traffic policy indicates re-routing is required 208, the type of DNS query is considered 220. If it is a DNS A-Record query, the DNS server returns 222 a constructed DNS response containing no address records back to the client device 100 (Fig 1) that issued the DNS query. If it is a DNS AAAA-Record query, the DNS server recursive resolves 252 the hostname to an IPv4 address. The IPv4 address is then encapsulated 254 into an IPv6 address. A constructed DNS response containing the encapsulated IPv6 address is returned 280 back to the client device 100 (Fig 1) that issued the DNS query.

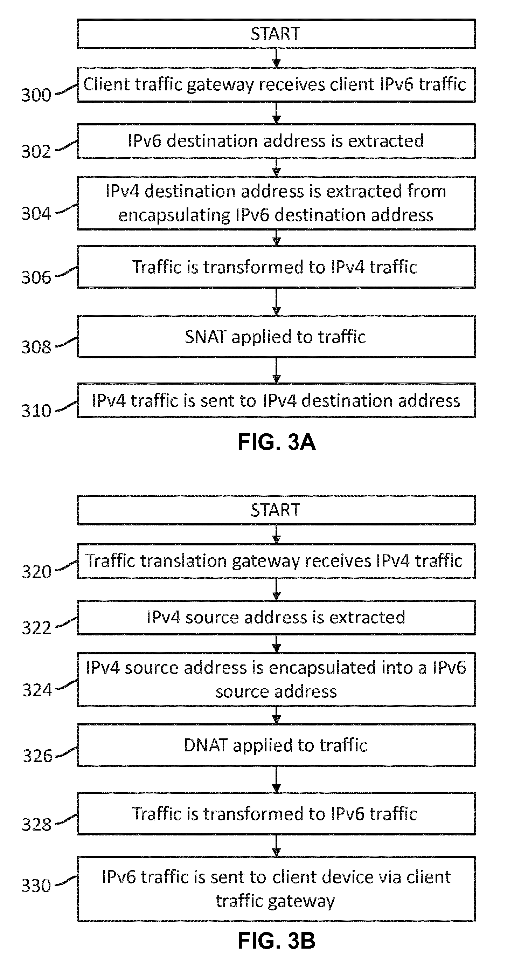

Referring now to Figure 3A, a logic flow chart of another aspect of the invention is shown, In Figure 3A, the flow of traffic coming from the mobile device and the IPv6 to IPv4 transformation being performed is shown to modify the traffic from the encapsulated IPv6 destination address to the actual public IPv4 destination address. Referring specifically to Figure 3A, it will be seen that when traffic from the client device 100 (Fig 1), sent to an encapsulated IPv6 destination, is received 300 via the client traffic gateway, the IPv6 destination address is extracted 302 from the traffic and the IPv4 destination address is retrieved 304 from the encapsulating IPv6 address. The IPv6 traffic is then transformed 306 into IPv4 traffic using one of various industry methods such as NAT64, NAT-PT, Teredo tunneling, proxy service, 6 to 4, RFC 3056, ISATAP, 6rd, TRT, RFC 3142, 464XLAT, RFC 6877, or the like. Persons having ordinary skill in the art will understand there are many standard ways in the industry to perform IPv6 to IPv4 transformations. The use of any of these standard approaches is well within the novel scope of the present invention. Source Network Address Translation (SNAT) is applied 308 to the source traffic address and the IPv4 traffic is sent 310 to the IPv4 destination address.

Figure 3B shows a flow chart showing the flow of traffic coming back from the destination server, and the IPv4 to IPv6 transformation being performed to modify the traffic to return to the client device. As is shown in Figure 1, it will be seen that the traffic sent to destination server 142 (Fig 1), is responded to by the server 142 (Fig 1) sending response traffic to the traffic translation gateway 135 (Fig 1). Referring now to Figure 3B, the traffic translation gateway receives 320 the IPv4 traffic and extracts 322 the IPv4 source address from the traffic. The IPv4 source address is encapsulated 324 into an IPv6 source address. Destination Network Address Translation (DNAT) is applied 326 to the destination traffic address and the IPv4 traffic is transformed 328 into IPv6 traffic using one of various industry methods such as NAT64, NAT-PT, Teredo tunneling, proxy service, 6to4, RFC 3056, ISATAP, 6rd, TRT, RFC 3142, 464XLAT, RFC 6877, or the like. Persons having ordinary skill in the art will understand there are many standard ways in the industry to perform IPv6 to IPv4 transformations. The use of any of these standard approaches is well within the novel scope of the present invention. The encapsulated IPv6 source address is applied to the traffic as part of the IPv4 to IPv6 transformation process. Finally, the IPv6 traffic is sent 330 via the client traffic gateway to the client device 100 (Fig 1).

In various embodiments of the present invention, the inventors of the present invention apply hostname-based selective routing for network traffic security inspection purposes. In some examples, a services provider may wish for network traffic to and from certain hostnames to be routed/rerouted through a centralized inspection point for traffic analysis/policy analysis purposes. Further, the services provider may wish for all other network traffic to proceed directly to the network destination and not be subject to analysis/inspection. In another example, a services provider may wish to transfer certain types of network traffic onto different traffic networks for other purposes, such as cost reduction, security purposes, archival purposes, or performance reasons. In light of the present patent application, one of ordinary skill in the art will recognize that many other type of analyses may also be implemented.

Some embodiments of the present invention include a network communications services node, which interacts with a communications-capable device (e.g. smart-phone, tablet, laptop, or the like). In some embodiments of the present invention, a communications-capable device implements a Domain Name System (DNS) protocol client, Internet Protocol version 4 (IPv4) "stack", and Internet Protocol version 6 (IPv6) "stack." A "stack" represents appropriate logic necessary for processing the specified communications protocol (for example: IPv4, IPv6) and is used to communicate with other computing entities using that protocol. In various embodiments, a computing device that supports both IPv4 and IPv6 stacks is termed a "dual-stack" device.

In various embodiments, a communications-capable device is configured to / capable of utilizing both IPv4 and IPv6 networks for network communications. In other words, the communications-capable device will typically have appropriately configured IPv4 and IPv6 protocol addresses and is attached to IPv4 and IPv6 networks. In some implementations, this may be achieved by combinations of a single directly connected network interface, multiple directly connected network interfaces, by a Virtual Private Network (VPN), or the like. As an example of this, a communications-capable device is configured with an IPv4 address and communicates with an IPv4 network via cellular network, wifi modem, or the like, while also being configured with an IPv6 address via a VPN interface to an IPv6 network. In this case, VPN IPv6 traffic travels encapsulated over the IPv4 network. As another example, a communications-capable device is configured with an IPv4 address and communicate with an IPv4 network via cellular modem, while also being configured with an IPv6 address (to communicate with an IPv6 network) via wifi modem, or the like. In this case, IPv6 traffic and IPv4 traffic utilize separate communications channels. In other embodiments, different combinations of communications channels are also possible.

In some embodiments of the present invention, a network communications services node implements a DNS server, and is capable of answering an IPv4 DNS inquiry (herein referred to as an "A" request) and IPv6 DNS inquiry (herein referred to as an "AAAA" request). Additionally, the network communications server may implement or work in tandem with a VPN server gateway, a network traffic gateway, a network traffic router, or any other communications gateway that the communications-capable device is configured to utilize. In various embodiments, the logic for the network communications services node and associated gateways may be implemented in software, firmware, hardware, or combination thereof.

In various embodiments, a DNS client in a communications-capable device is configured to use a DNS server of the network communications services node. More specifically, the DNS client in the communications-capable device sends both IPv4 'A' DNS inquiries and IPv6 'AAAA' DNS inquiries to the configured DNS server for each host (e.g. www.yahoo.com, m.google.com) it wishes to communicate with. In response, in various embodiments, the base selective routing mechanism in the network communications services nodes receives both 'A' and 'AAAA' DNS inquiries, and typically responds only to one of the inquiries. In various embodiments, the type of response allows network traffic to be routed in different ways.

For example, a communications-capable device sends both a DNS 'A' and 'AAAA' inquiries for the hostname 'www. example1.com'. In response, the network communications services node can choose to respond to the DNS 'A' inquiry with an IPv4 address, which causes the communications-capable device to route traffic to the indicated IPv4 address over the IPv4 network. Alternatively, the network communications services node can choose to respond to the DNS 'AAAA' inquiry with an IPv6 address, which causes the communications-capable device to route traffic to the indicated IPv6 address over the IPv6 network.

In various embodiments, the selective routing mechanism further utilizes the ability of a large IPv6 address (having 128 bits) to wholly contain an IPv4 address (having 32 bits). In some embodiments, an IPv4 address can be represented in IPv6 format, such as using the "::ffff:0000:0000/96" IPv6 address representation format. In other embodiments, other formats may be used. Non-standard formats are also possible, for example, by using an IPv6 range prefix and including the IPv4 address after the prefix. One example prefix would be "fd00::/8". In light of the present patent disclosure, one of ordinary skilled in the related art will be able to envision other techniques for containing an IPv4 address in an IPv6 format.

In various embodiments, the network communications services node, when receiving the DNS inquiries, described above from a communications-capable device , can choose to answer a IPv6 DNS 'AAAA' request using an IPv6 address format that encapsulates the IPv4 address for the inquired hostname. This causes the communications-capable device to send traffic to the indicated IPv6 address over the IPv6 network, while the address carries within it the IPv4 version of the address.

In various embodiments, the techniques described can be utilized by the network communication services node in combination with a VPN server gateway, a network traffic gateway, a network traffic router, a communications gateway, or the like. In some embodiments, the network communications services node implements or coordinates with an IPv6 gateway for some or all IPv6 destinations. In one example, an implementation uses a VPN gateway utilizing an inner IPv6 network and the VPN gateway itself is reachable over IPv4 network.

In operation, when receiving the IPv6 network traffic from the communications-capable device, the gateway or associated network services inspect and analyze the traffic. Examples of inspection would be for security inspection, for malware detection, for corporate data tracking or leakage purposes, etc. Other examples are for network traffic policy enforcement. In other embodiments, many other uses are also contemplated.

In various embodiments, after inspection occurs, the gateway translates the IPv6 network traffic into an IPv4 form, utilizing the encapsulated IPv4 address. Some implementations to perform this function are referred to as "6 to 4 relays" herein. In specific examples, Linux "sit" and "tun6to4" interfaces can be used. In various embodiments, the translation operation may also involve a Network Address Translation (NAT) operation, or the like. In other embodiments, custom operations may be used that achieve the same effect of creating outbound IPv4 traffic from inbound IPv6 traffic.

In some embodiments, by utilizing the techniques described, the network communications services node can selectively control the routing of IPv4 traffic of the communications-capable device. In one scenario, the communications-capable device wants to communicate with hostname www.example1.com. The communications-capable device sends DNS 'A' and DNS 'AAAA' inquiries for hostname www.example1.com to the DNS server of the network communications services node. As described above, the network communications services node implements an IPv6 VPN gateway, traffic inspection module, and IPv6 to IPv4 translation capability. Then, in response to the inquiries, the network communications services node programmatically determines, via control policy or other such configurable capability, that inspection of the traffic is not warranted. Accordingly, thus the network communications services node responds with a DNS 'A' response of an IPv4 address "1.2.3.4". The communications-capable device receives the DNS 'A' response and then proceeds to send network traffic on the IPv4 network directly to destination address "1.2.3.4." In some embodiments, the network communications services node is no longer involved with such network traffic.

In another scenario, the communications-capable device once again wants to communicate with hostname www.example2.com. The communications-capable device then sends both DNS 'A' and DNS 'AAAA' inquiries for hostname www.example2.com to the DNS server of the network communications services node. As described above, the network communications services node implements an IPv6 VPN gateway, traffic inspection module, and IPv6 to IPv4 translation capability. Then, in response to the inquiries, the network communications services node programmatically determines, via control policy or other such configurable capability, that inspection of the traffic is warranted. Accordingly, the network communications services node responds with a DNS 'AAAA' response of an IPv6 address "::ffff: 1.2.3.4". Since this is an IPv6 address, the communications-capable device proceeds to send network traffic on the IPv6 network via the VPN gateway to the network destination address "::ffff: 1.2.3.4", causing the network traffic to arrive to the network communications services node. In various embodiments, in response to the network traffic, the network communications services node performs any necessary traffic or data inspection (specified by the control policy, or the like), and processes the network traffic accordingly. Upon completion of the processing, the network communication services node translates the IPv6 traffic (originally destined to "::ffff: 1.2.3.4") from the communications-capable device into IPv4 traffic destined to "1.2.3.4". The responsive network traffic is returned to the network communications services node, where it is translated from IPv4 address into an appropriate IPv6 address, and accordingly, the traffic is returned to the communications capable device. In various embodiments, in response to the responsive network traffic, the network communications services node performs any necessary traffic or data inspection (specified by the control policy, or the like), and processes the responsive network traffic accordingly. Upon completion of the processing, the network communication services node translates the IPv6 traffic destined to "::ffff: 1.2.3.4" from the communications-capable device into IPv4 destined to "1.2.3.4", and provides the processed responsive network traffic. In some embodiments, a result of the above process is that the communications-capable device still communicates with the same network destination, but via selective hostname-based routing through the network communications services node.

In various embodiments, any number of control policies may be implemented, upon the received network data. Examples of control policies may include: partial or complete recording of network traffic; partial or complete recording of web sites visited; partial or complete monitoring of data usage; partial or complete monitoring of data transfers (e.g. documents, spreadsheets, e-mail messages, proprietary data, or the like); partial or complete blocking of access to particular web sites, throttling/bandwidth limiting/load balancing of particular web sites; partial or complete blocking of transfer of particular types of data (e.g. documents, spreadsheets, presentations, messages, video, audio, sensitive data, social security numbers, account numbers or the like); partial or complete modification/transformation of data; partial or complete removal or transformation of undesired content (e.g. virus, Trojan, malware, advertisements, phishing, fraud solicitations, unsolicited email, SPAM, or the like); partial or complete transformation of data via the use of encryption or decryption; partial or complete substitution of alternate data (e.g. alternate file contents, application executable, or the like).

In various embodiments, the policies supported may also be based upon time of day, day of the week, the geographic location of the communications capable device, the geographic destination of the traffic, or the like.

As can be envisioned, such control policies would be dynamically applied to the incoming DNS hostname inquiry. Accordingly, a network communications services node may respond to a first inquiry from a client with an IPv4 response and may respond to a second inquiry from the client with an IPv6 response. Further, the first inquiry and the second inquiry may be for the same hostname or different host names.

Some aspects of the invention may include;
- A network communications services node, having one or more computing processors, data storage, plurality of network interfaces, also implementing a DNS server for IPv4 and IPv6
   o The node will receive IPv4 DNS 'A' inquiries and IPv6 DNS 'AAAA' inquiries, and choose to respond with an IPv4 DNS address response to cause a mobile client to send traffic via IPv4 network
   o The node will receive IPv4 DNS 'A' inquiries and IPv6 DNS 'AAAA' inquiries, and choose to respond with an IPv6 DNS address response to cause a mobile client to send traffic via IPv6 network
   o The logic to choose between responding with IPv4 and IPv6 can optionally be based on a dynamic policy-based decision
- A network communications services node, consisting of the usual computing processor, data storage, plurality of network interfaces, also implementing a DNS server for IPv4 and IPv6, and an IPv6 traffic gateway
   o The IPv6 traffic gateway could be implemented via a VPN gateway, optionally accessible over IPv4
   o The node will receive IPv4 DNS 'A' inquiries and IPv6 DNS 'AAAA' inquiries, and choose to respond with an IPv4 DNS address response to cause a mobile client to send traffic via IPv4 network
   o The node will receive IPv4 DNS 'A' inquiries and IPv6 DNS 'AAAA' inquiries, and choose to respond with an IPv6 DNS address response to cause a mobile client to send traffic via IPv6 network through the IPv6 traffic gateway
      ■ The IPv6 DNS address uses a format that encapsulates the IPv4 address inside of it
   o The logic to choose between responding with IPv4 and IPv6 can optionally be based on a dynamic policy-based decision
   o The IPv6 traffic gateway will receive the client's IPv6 traffic, optionally perform a traffic operation on the traffic, and translate/relay the IPv6 traffic into IPv4 traffic using the IPv4 address embedded within the IPv6 address
      ■ Optional traffic operations can be plurality of data inspection, policy enforcement, logging, monitoring, filtering, modification, etc.
      ■ The optional traffic operations can optionally be directed by a policy dictating the operations to perform

Although an illustrative embodiment of the invention has been shown and described, it is to be understood that various modifications and substitutions may be made by those skilled in the art without departing from the novel spirit and scope of the invention.

## Claims

1. A method for responding to Domain Name System (DNS) inquiries from a network client comprising the steps of:
providing a computing system having elements for at least receiving and sending requests for resolution of a DNS inquiry from computing devices and storing, reviewing and/or modifying the DNS inquiries, programmed to perform the method,
receiving in the computing system, one or more DNS inquiries from a network client, wherein the DNS inquiries comprise at least one of an IPv4 DNS 'A' inquiry and an IPv6 DNS 'AAAA' inquiry;
determining in the computing system, whether to provide an IPv6 DNS address response in response to the DNS inquires;
responding in the computing system, with the IPv6 DNS address to the network client when it is determined that the IPv6 DNS address should be provided; and
responding in the computing system, with an IPv4 DNS address to the network when it is determined that an IPv6 DNS address should not be provided.

2. The method for responding to Domain Name System (DNS) inquiries from a network client of claim 1 wherein the step for determining in the computing system whether to provide the IPv6 DNS address comprises determining within elements of the computing system whether a hostname associated with the DNS inquiries is part of a pre-determined list of hostnames, or wherein the step for determining in the computing system whether to provide the IPv6 DNS address comprises determining within elements of the computing system whether a hostname associated with the DNS inquiries is not part of a pre-determined list of hostnames.

3. The method for responding to Domain Name System (DNS) inquiries from a network client of claim 1 wherein the DNS inquiries from a network client are received via a VPN gateway.

4. The method for responding to Domain Name System (DNS) inquiries from a network client of claim 1 wherein after responding in the computing system, with the IPv6 DNS address to the network client, the method further comprises the steps of:
receiving, in the computing system, a plurality of network traffic destined to the IPv6 DNS address;
determining, in the computing system, an IPv4 address associated with the plurality of network address in response to the IPv6 DNS address;
requesting, from the computing system, network data from a network resource associated with the IPv4 address; and
receiving, in the computing system, the network data from the network resource.

5. The method for responding to Domain Name System (DNS) inquiries from a network client of claim 4 further comprising the steps of:
logging, in the computing system, the network data; and
sending, from the computing system, the network data to the network client.

6. The method for responding to Domain Name System (DNS) inquiries from a network client of claim 4 further comprising the steps of:
determining, in the computing system, whether the network data violates a control policy; and
inhibiting output from the computing system, of the network data to the network client when it is determined that the network data violates the control policy.

7. The method for responding to Domain Name System (DNS) inquiries from a network client of claim 6 wherein inhibiting output from the computing system, of the network data to the network client, includes reducing the transmission speed of the network data to the network client.

8. The method for responding to Domain Name System (DNS) inquiries from a network client of claim 5 further comprising the steps of:
determining in the computing system, whether the network data violates a control policy; and
outputting from the computing system, the network data to the network client when it is determined that the network data does not violate the control policy.

9. A network communications services node for responding to Domain Name System (DNS) inquiries from a network client, comprising:
a memory having a plurality of control policies;
a processor coupled to the memory;
wherein the processor is programmed to receive the DNS inquiries from the network client, and wherein the DNS inquiries comprises an IPv4 DNS inquiry and an IPv6 DNS inquiry, and wherein the processor is programmed to respond to the network client with an IPv4 address or an IPv6 address in response to the DNS inquiries and to the plurality of control policies.

10. The network communications services node of claim 9 wherein the processor operates to determine the IPv6 address in response to the IPv4 address, preferably
wherein the IPv4 address is encapsulated in the IPv6 address.

11. The network communications services node of claim 9 wherein the processor is either programmed to implement an IPv6 traffic gateway or configured to implement an IPv4 traffic gateway, or
wherein the control policies comprise a plurality of hostnames; and wherein the processor is programmed to respond with the IPv4 address when a hostname of the DNS inquiries is identified in the plurality of hostnames, or
wherein the control policies comprise a plurality of hostnames; and wherein the processor is programmed to respond with the IPv6 address when a hostname of the DNS inquiries is identified in the plurality of hostnames.

12. The network communications services node of claim 9 wherein the processor is programmed to implement a VPN gateway for communicating with the network client.

13. The network communications services node of claim 12 wherein the control policies comprise a plurality of hostnames; and wherein the processor is programmed to respond with the IPv4 address when a hostname of the DNS inquiries is identified in the plurality of hostnames.

14. A method for outputting network data to a user on a computing-system programmed to perform the method comprising the steps of:
sending from the computing-system, an identifier associated with the user to a network communications server node;
establishing with the computing-system, a virtual private network with the network communications server node;
sending from the computing-system, DNS hostname inquiries to a network communications server node, wherein the DNS hostname inquiries comprises an IPv4 DNS 'A' inquiry and an IPv6 DNS 'AAAA' inquiry;
receiving from the computing-system, an IPv6 DNS address from the network communications server node in response to the DNS inquiries when the network communications server node determines a hostname associated with the DNS hostname is in a pre-determined list of hostnames; and
receiving from the computing-system, an IPv4 DNS address from the network communications server node in response to the DNS inquiries when the network communications server node determines the hostname associated with the DNS hostname is not in the pre-determined list of hostnames.

15. The method of claim 14 wherein the IPv6 DNS address includes therewithin the IPv4 DNS address, or wherein the method further comprises the step of using the IPv4 DNS address to request data from a remote server.
